# EUROPEAN PATENT SPECIFICATION

(11) **EP 3 596 816 B1**
(45) Date of publication and mention of the grant of the patent: **31.03.2021**
(21) Application number: 18787045.6
(22) Date of filing: 17.04.2018
(51) Int. Cl.: H02M 1/36, H02M 1/32, H02M 1/00, H05B 45/385

(54) **STARTUP CONTROL CIRCUIT**
ANLAUFSTEUERUNGSSCHALTUNG
CIRCUIT DE COMMANDE DE DÉMARRAGE

(30) Priority: 21.04.2017 CN 201720423838 U; 17.11.2017 GB 201719137
(43) Date of publication of application: 22.01.2020
(73) Proprietor: Tridonic GmbH & Co KG, 6851 Dornbirn (AT)
(72) Inventor: MAO, Egbert, Shenzhen Guangdong 518109 (CN); KE, Frank, Shenzhen Guangdong 518109 (CN); ZHONG, Scotty, Shenzhen Guangdong 518109 (CN); CHEN, Steven, Guangdong 518109 (CN)
(74) Representative: Rupp, Christian
(86) International application number: PCT/CN2018/083294
(87) International publication number: WO 2018/192468

(56) References cited:
- CN-A- 102 355 134
- CN-A- 102 361 402
- CN-A- 103 929 055
- CN-A- 104 883 043
- CN-A- 105 873 310
- CN-U- 203 086 784
- CN-U- 206 850 667
- JP-A- 2006 204 082
- JP-A- 2011 010 422
- US-A1- 2008 175 027
- US-A1- 2009 189 582
- US-A1- 2013 077 353
- US-A1- 2014 177 284
- US-B1- 6 456 511

## Description

### FIELD OF THE INVENTION

The invention relates to a startup control circuit preferably for a LED driver, used for supplying a startup voltage for a control circuit of a switched power supply.

### BACKGROUND

Nowadays, modern LED (Light Emitting Diode) driver use converter to provide constant current.

Typical circuits to drive a LED are flyback converters or buck converters.

Document JP 2011010422 A discloses that a power is converted into a DC voltage, by using a rectification smoothing section and fed to a primary-side coil L1 of a transformer TR. An AC voltage, corresponding to a winding ratio with the primary-side coil, is induced in a secondary-side coil L2 on the basis of the operation of a switching element Q1 and the DC voltage is converted by a diode D1 and the capacitor C2. The power supply device includes the function for determining a soft start time, at a value of a capacitor Cs connected to a start terminal from the rectification smoothing section via a resistor R2, and feeds the power as power at the start of a control section, which feeds a switching pulse Ps to the switching element Q1. The AC voltage induced to an auxiliary coil L3 of the transformer TR is rectified by an auxiliary coil rectification smoothing section, and fed as the power of the control section. A compensation circuit is connected between the start terminal and a DC power supply Vc, in order to prevent the heat generation of a diode D2 and a resistor R3 owing to the short-circuit of the capacitor C4.

Document US 2009/0189582 A1 discloses a switching power supply device capable of automatically restarting an electrical apparatus without a user operation when a voltage of the electrical apparatus or an operation of the electrical apparatus is abnormal. The switching power supply device is provided with a short-circuiting switch for a shunt regulator included in the feedback circuit. When an abnormal condition occurs in a secondary side circuit, the short-circuiting switch is turned on by means of a control signal to reduce a voltage of a primary side auxiliary winding and temporarily stop an operation of a primary side control circuit and of a switching element. A primary side capacitor continues to be charged by a power supply through a starting resistor. The primary side control circuit and the switching element automatically restart to operate.

Document JP 2006204082 A discloses a capacitor for stabilizing a voltage that is fitted externally to the power terminal Vcc, and a supply voltage is input from an auxiliary winding at a primary side of a transformer. A voltage of rectified commercial power supply which is supplied to the primary side of the transformer is input to a high-voltage input terminal VH. A junction transistor J11 causes a starting current to flow to the power terminal Vcc from the high-voltage input terminal VH, and charges the capacitor for stabilizing the voltage. NMOS transistors MN11, MN12, and bipolar transistors Q11, Q12 connected by Darlington circuit connection are controlled so that the starting current may flow at starting. PMOS transistors MP11, MP13 connected by current mirror circuit connection adjusts the starting current to become constant.

Document US 6456511 B1 discloses an output isolated, switching power supply which has a transformer with a primary and two secondaries, an electronic switch in series with the primary, a first rectifier and filter on the first secondary to provide bias power during both startup and operating modes, and a second rectifier and filter on the second secondary to provide regulated output power. A resistor-capacitor network on the primary side provide an initial operating condition, such as a single control pulse, to the electronic switch which causes sufficient energy to be transferred through the first secondary to supply sufficient startup energy to operate a current control integrated circuit on the secondary side in a staged fashion. After the initial operating condition, the current control integrated circuit generates and applies a control signal to the electronic switch through an isolation circuit to cause the electronic switch to turn on and off in controlled fashion in order to deliver regulated power to the output of the supply. The low voltage, secondary side, current control integrated circuit provides a further aspect of the present invention.

Document US 2014/177284 A1 discloses a switching power-supply apparatus that includes a control circuit that controls on-and-off switching of a switching element, a first rectifying-and-smoothing circuit that smooths a voltage generated in a secondary winding, and a second rectifying-and-smoothing circuit that smooths a voltage generated in a tertiary winding as a power supply voltage, a starting circuit that supplies: a first constant current to the control circuit when the power supply voltage is equal to or lower than a first threshold voltage, which is lower than a starting voltage of the control circuit, and is larger than the starting voltage of the control circuit, as a starting current; and a second constant current, which is greater than the first constant current, to the control circuit when the power supply voltage is larger than the first threshold voltage and is equal to or lower than the starting voltage, as the starting current.

Document CN 104883043 A discloses a switching mode power supply that comprises the components of a switching mode power supply chip which is provided with a controlled output port and a protected monitored input port; a controlled switch which is provided with a first control end, a first switch end and a second switch end, wherein the first control end is connected with the controlled output end; a switch transformer which is provided with a main coil, wherein one end of the main coil is connected with an input voltage, and the other end is connected with the first switch end; a detecting switch which is serially connected between the second switch end and group, wherein the second switch end is connected with the protected monitored input port for supplying overload and shortcircuit protection for the switching mode power supply; and a protecting switch which is provided with a second control end, a third switch end and a fourth switch end. The second control end is connected with the second switch end. The third switch end is connected with the first control end. The fourth switch end is grounded. The switching mode power supply can prevent switch unit damage of the switching mode power supply because of short circuit current impact. Document US 2013/077353 A1 discloses a fast startup switching converter that comprises a first switch, a second switch, a third switch, a first capacitor, and a controller controlling the ON and OFF switching of the second and third switches. The first terminal of the first switch is coupled to the input terminal of the switching converter, the second terminal is coupled to the first terminal of the second switch. The first terminal of the third switch is coupled to the second terminal of the first switch and the first terminal of the second switch. The first capacitor is coupled to the second terminal of the third switch and the controller to provide a power supply voltage for the controller. The switching converter charges the first capacitor through the first and third switches in a first working state, and transfers energy to a load through the first and second switches in a second working state.

However, the applicant found that startup control may be improved. In the following, the startup voltage is considered to represent a supply voltage.

### SUMMARY

The invention relates to a startup or supply voltage control circuit, as set forth in claim 1, configured to provide a startup or supply voltage for a control circuit of a switched power supply, the startup control circuit comprises:
a startup or supply voltage generation circuit having a first capacitor and a first output terminal, the first capacitor being charged to generate a startup voltage, the startup voltage being outputted from the first output terminal of the startup voltage generation circuit to the control circuit;
a charge switch element, a gate of which being connected to a charge node, when the charge switch element is turned on, it supplies a current for charging the first capacitor; and
a short-circuit detecting and switching unit, which is connected to the first output terminal of the startup voltage generation circuit, and when the first capacitor of the startup voltage generation circuit is shorted, the short-circuit detecting and switching
unit turns off the charge switch element, so as to stop supplying the current for charging the first capacitor.

The short-circuit detecting and switching unit comprise a first switch element and a second switch element. A gate of the first switch element is connected to the first output terminal via a first diode unit. A drain of the first switch element is connected to the charge node via a first resistor. A gate of the second switch element is connected to the drain of the first switch element. A drain of the second switch element is connected to the gate of charge switch element.

When the first capacitor of the startup voltage generation circuit is not shorted, the first switch element is conducting, the second switch element is switched off, and the charge switch is conducting. When the first capacitor of the startup voltage generation circuit is shorted, the first switch element is switched off, the second switch element is conducting, and the charge switch is switched off.

According to a preferred embodiment, the gate of charge switch element may be connected to the charge node via a second resistor. A third resistor and a second capacitor are connected in parallel between the gate and a source of the first switch element. A third capacitor may be connected in parallel between the gate and a source of the second switch element.

A fourth capacitor may be connected between the charge node and a ground terminal. The fourth capacitor may be connected in parallel with a first voltage stabilizing unit, two terminals of the second resistor are connected in parallel to a second diode unit, and a second voltage stabilizing unit may be connected in parallel between the charge node and a source of the charge switch element.

The switch power supply may further comprising a power switch which is connected in series with the charge switch element which is controlled by the control circuit.

The switch power supply may comprise a transformer with a primary winding, a secondary winding and an auxiliary winding, whereby the primary winding is connected in series with the charge switch element and the power switch. The auxiliary winding may form a part of the startup voltage generation circuit.

A primary side current may be flowing the primary winding when the charge switch element and the power switch are switched on.

A supply voltage may be induced into the auxiliary winding when a primary side current is flowing in the primary winding whereby this supply voltage is fed via a decoupling diode into the first capacitor, of the startup voltage generation circuit. The supply voltage fed into the startup voltage generation circuit may form the startup voltage generated by the startup voltage generation circuit and provided to the first output terminal.

The invention also relates a LED driver, comprising a control circuit and the startup control circuit as described above, the startup control circuit supplying a startup voltage for the control circuit, whereby the LED driver preferably comprises a flyback converter.

The one or more LED driven by the LED driver may be powered from the secondary winding.

These and further aspects and features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within scope of the appended claims. Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

Many aspects of the invention can be better understood with reference to the following drawings. The components in the drawings are not necessarily to scale, emphasis instead being placed upon clearly illustrating the principles of the present invention. To facilitate illustrating and describing some parts of the invention, corresponding portions of the drawings may be exaggerated in size, e.g., made larger in relation to other parts than in an exemplary device actually made according to the invention. Elements and features depicted in one drawing or embodiment of the invention may be combined with elements and features depicted in one or more additional drawings or embodiments. Moreover, in the drawings, like reference numerals designate corresponding parts throughout the several views and may be used to designate like or similar parts in more than one embodiment.

### BRIEF DESCRIPTION OF THE DRAWING

The drawings are included to provide further understanding of the present invention, which constitute a part of the specification and illustrate the preferred embodiments of the present invention, and are used for setting forth the principles of the present invention together with the description. The same element is represented with the same reference number throughout the drawings.

In the drawings:
Figure 1 is a schematic diagram of a startup circuit in accordance with an embodiment of the present invention;

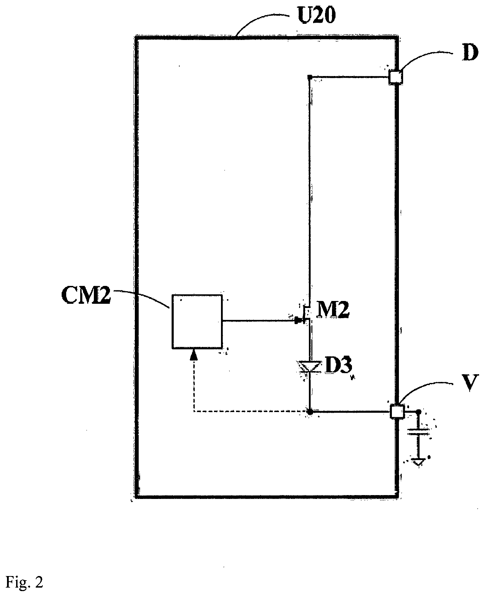

Figure 2 is a schematic diagram a part of the startup circuit in accordance with an embodiment of the present invention.

### DETAILED DESCRIPTION

The many features and advantages of the embodiments are apparent from the detailed specification and, thus, it is intended by the appended claims to cover all such features and advantages of the embodiments that fall within the scope thereof. Further, since numerous modifications and changes will readily occur to those skilled in the art, it is not desired to limit the inventive embodiments to the exact construction and operation illustrated and described, and accordingly all suitable modifications and equivalents may be resorted to, falling within the scope of the appended claims.

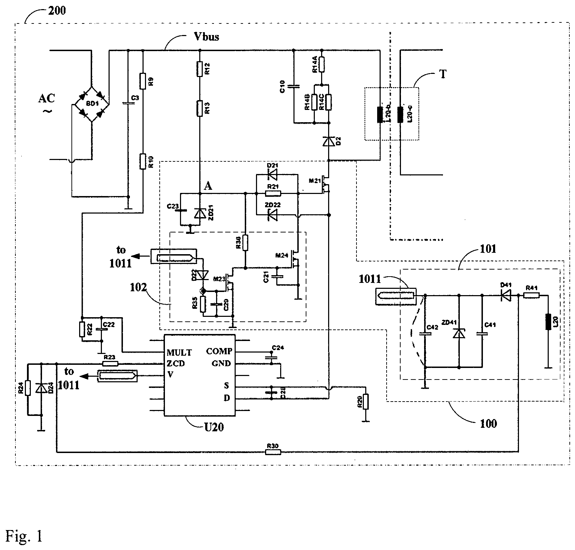

As shown in Figure 1, there is a clocked converter as switched power supply, in this example a flyback converter, comprising a control circuit.

A startup control circuit 100 is used for supplying a startup voltage for a control circuit U20 of a switched power supply 200, characterized in that the startup control circuit 101 comprises:
a startup voltage generation circuit 101 having a first capacitor C41, C42 and a first output terminal 1011, the first capacitor C41, C42 being charged to generate a startup voltage, the startup voltage being outputted from the first output terminal 1011 of the startup voltage generation circuit 101 to the control circuit U20;
a charge switch element M21, a gate of which being connected to a charge node A, when the charge switch element M21 is turned on, it supplies a current for charging the first capacitor C41, C42; and
a short-circuit detecting and switching unit 102, which is connected to the first output terminal 1011 of the startup voltage generation circuit 101, and when the first capacitor C41, C42 of the startup voltage generation circuit 101 is shorted, the short-circuit detecting and switching unit 102 turns off the charge switch element M21, so as to stop supplying the current for charging the first capacitor C41, C42.

The short-circuit detecting and switching unit 102 may comprise a first switch element M23 and a second switch element M24. A gate of the first switch element M23 may be connected to the first output terminal via a first diode unit D22. A drain of the first switch element M23 may be connected to the charge node via a first resistor R36. A gate of the second switch element M24 may be connected to the drain of the first switch element M23. A drain of the second switch element M24 may be connected to the gate of charge switch element M21.

When the first capacitor C41, C42 of the startup voltage generation circuit 101 is not shorted, the first switch element M23 is conducting, the second switch element M24 is switched off, and the charge switch M21 is conducting. When the first capacitor C41, C42 of the startup voltage generation circuit 101 is shorted, the first switch element M23 is switched off, the second switch element M24 is conducting, and the charge switch M21 is switched off.

The gate of charge switch element M21 may be connected to the charge node via a second resistor R21. A third resistor R35 and a second capacitor C29 are connected in parallel between the gate and a source of the first switch element M23. A third capacitor C21 may be connected in parallel between the gate and a source of the second switch element M24.

A fourth capacitor C23 may be connected between the charge node and a ground terminal.

The fourth capacitor C23 may be connected in parallel with a first voltage stabilizing unit ZD21, two terminals of the second resistor R21 are connected in parallel to a second diode unit D21, and a second voltage stabilizing unit ZD22 may be connected in parallel between the charge node and a source of the charge switch element M21.

The invention also relates to a switched power supply 200, comprising a control circuit U20 and the startup control circuit 100 as described above, the startup control circuit 100 supplying a startup voltage for the control circuit U20.

The switch power supply 200 may further comprising a power switch M2 which is connected in series with the charge switch element M21and which is controlled by the control circuit U20.

The switch power supply 200 may comprise a transformer 7 with a primary winding L20b, a secondary winding L20c and an auxiliary winding L20, whereby the primary winding L20b is connected in series with the charge switch element M21and the power switch M2. The auxiliary winding L20 may form a part of the startup voltage generation circuit 101.

A primary side current may be flowing the primary winding L20b when the charge switch element M21and the power switch M2 are switched on.

A supply voltage may be induced into the auxiliary winding L20 when a primary side current is flowing in the primary winding L20b whereby this supply voltage is fed via a decoupling diode D41 into the first capacitor C41, C42 of the startup voltage generation circuit 101. The supply voltage fed into the startup voltage generation circuit 101 may form the startup voltage generated by the startup voltage generation circuit 101 and provided to the first output terminal 1011.

The voltage across the auxiliary winding L20 may be forwarded to a sensing pin of the control circuit U20. The control circuit U20 may detect by the aid of the monitoring of the voltage across the auxiliary winding L20 when time point when the transformer 7 has been demagnetized after the current through the secondary winding L20c has reached zero. The control circuit U20 may switch on the power switch M2 when it has detected that the transformer 7 has been demagnetized. If the charge switch element M21 is switched on a primary side current will flow through the power switch M2, the charge switch element M21 and the primary winding L20b.

The primary side current through the primary winding L20b reaches a predefined maximum level, the control circuit U20 may be able to detect this, e.g. by the sense resistor R29.

When the primary side current through the primary winding L20b has reached a predefined maximum level, the control circuit U20 may open the power switch M2. The primary side current will be interrupted by opening the power switch M2. As the transformer 7 is magnetized a secondary side current will flow through the secondary winding L20c to the load which may be for instance one or more LED. The secondary side current will flow as long as the transformer 7 is magnetized.

The invention also relates a LED driver, comprising a control circuit U20 and the startup control circuit 100 as described above, the startup control circuit 100 supplying a startup voltage for the control circuit U20, whereby the LED driver preferably comprises a flyback converter.

The one or more LED driven by the LED driver may be powered from the secondary winding L20c.

## Claims

1. A supply voltage control circuit (100) configured to provide a supply voltage for a control circuit (U20) of a switched power supply (200), the supply voltage control circuit (100) comprises:
a supply voltage generation circuit (101) having a first capacitor (C41, C42) and a first output terminal (1011), the first capacitor being charged to generate a supply voltage, the supply voltage being outputted from the first output terminal (1011) of the supply voltage generation circuit (101) to the control circuit (U20);
a charge switch element (M21), a gate of which being connected to a charge node (A), wherein, when the charge switch element (M21) is turned on, the charge switch element (M21) is configured to supply a current for charging the first capacitor (C41, C42) ; and
a short-circuit detecting and switching unit (102), which is connected to the first output terminal (1011)of the supply voltage generation circuit (101), wherein, when the first capacitor (C41, C42) of the supply voltage generation circuit (101) is shorted, the short-circuit detecting and switching unit (102) is configured to turn off the charge switch element (M21), so as to stop supplying the current for charging the first capacitor (C41, C42),
**characterized in that**
the short-circuit detecting and switching unit (102) comprises a first switch element (M23) and a second switch element (M24) ;
wherein, a gate of the first switch element (M23) is connected to the first output terminal via a first diode unit (D22),
a drain of the first switch element is connected to the charge node via a first resistor (R36),
a gate of the second switch element (M24) is connected to the drain of the first switch element (M23),
a drain of the second switch element (M24) is connected to the gate of charge switch element (M21), and wherein,
when the first capacitor (C41, C42) of the supply voltage generation circuit (101) is not shorted, the first switch element (M23) is conducting, the second switch element (M24) is switched off, and the charge switch element (M21) is conducting, and when the first capacitor (C41, C42) of the supply voltage generation circuit (101) is shorted, the first switch element (M23) is switched off, the second switch element (M24) is conducting, and the charge switch element (M21) is switched off.

2. The supply voltage control circuit (100) according to claim 1, **characterized in that**, the gate of the charge switch element (M21) is connected to the charge node (A) via a second resistor (R21),
a third resistor (R35) and a second capacitor (C29) are connected in parallel between the gate and a source of the first switch element (M23),
and a third capacitor (C21) is connected in parallel between the gate and a source of the second switch element (M24).

3. The supply voltage control circuit (100) according to claim 2, **characterized in that**, a fourth capacitor (C23) is connected between the charge node (A) and a ground terminal.

4. The supply voltage control circuit (100) according to claim 3, **characterized in that**, the fourth capacitor (C23) is connected in parallel with a first voltage stabilizing unit
(ZD21),
two terminals of the second resistor (R21) are connected in parallel to a second diode unit (D21),
and a second voltage stabilizing unit (ZD22) is connected in parallel between the charge node and a source of the charge switch element (M21).

5. A switched power supply (200), comprising a control circuit (U20) and the supply voltage control circuit (100) as claimed in any one of claims 1-4, the supply voltage control circuit (100) providing a supply voltage for the control circuit (U20)

6. A switched power supply (200) according to claim 5, comprising a power switch (M2) which is connected in series with the charge switch element (M21) and which is controlled by the control circuit (U20) .

7. A switched power supply (200) according to claim 6, comprising a transformer (7) with a primary winding (L20b), a secondary winding (L20c) and an auxiliary winding (L20), whereby the primary winding (L20b) is connected in series with the charge switch element

8. A switched power supply (200) according to claim 7, whereby a primary side current is flowing in the primary winding (L20b) when the charge switch element (M21) and the power switch (M2) are switched on.

9. A switched power supply (200) according to claim 8, whereby a supply voltage is induced into the auxiliary winding (L20) when a primary side current is flowing in the primary winding (L20b) whereby this supply voltage is fed via a decoupling diode (D41) into the first capacitor (C41, C42) of the supply voltage generation circuit (101)

10. A LED driver, comprising a control circuit (U20) and the supply voltage control circuit (100) as claimed in any one of claims 1-4, the supply voltage control circuit (100) providing a supply voltage for the control circuit (U20), whereby the LED driver preferably comprises a flyback converter.

## Patentansprüche

1. Versorgungsspannungssteuerungsschaltung (100), die dazu konfiguriert ist, eine Versorgungsspannung für eine Steuerungsschaltung (U20) eines Schaltnetzteils (200) bereitzustellen, wobei die Versorgungsspannungssteuerungsschaltung (100) umfasst:
eine Versorgungsspannungserzeugungsschaltung (101), die einen ersten Kondensator (C41, C42) und einen ersten Ausgangsanschluss (1011) aufweist, wobei der erste Kondensator geladen wird, um eine Versorgungsspannung zu erzeugen, wobei die Versorgungsspannung von dem ersten Ausgangsanschluss (1011) der Versorgungsspannungserzeugungsschaltung (101) an die Steuerungsschaltung (U20) ausgegeben wird;
ein Ladeschaltelement (M21), von dem ein Gate mit einem Ladeknoten (A) verbunden ist, wobei, wenn das Ladeschaltelement (M21) eingeschaltet ist, das Ladeschaltelement (M21) dazu konfiguriert ist, einen Strom zum Laden des ersten Kondensators (C41, C42) zuzuführen; und
eine Kurzschlusserfassungs- und Schalteinheit (102), die mit dem ersten Ausgangsanschluss (1011) der Versorgungsspannungserzeugungsschaltung (101) verbunden ist, wobei, wenn der erste Kondensator (C41, C42) der Versorgungsspannungserzeugungsschaltung (101) kurzgeschlossen ist, die Kurzschlusserfassungs- und Schalteinheit (102) dazu konfiguriert ist, das Ladeschaltelement (M21) auszuschalten, um das Zuführen des Stroms zum Laden des ersten Kondensators (C41, C42) zu stoppen,
**dadurch gekennzeichnet, dass**
die Kurzschlusserfassungs- und Schalteinheit (102) ein erstes Schaltelement (M23) und ein zweites Schaltelement (M24) umfasst;
wobei ein Gate des ersten Schaltelements (M23) über eine erste Diodeneinheit (D22) mit dem ersten Ausgangsanschluss verbunden ist,
ein Drain des ersten Schaltelements über einen ersten Widerstand (R36) mit dem Ladeknoten verbunden ist,
ein Gate des zweiten Schaltelements (M24) mit dem Drain des ersten Schaltelements (M23) verbunden ist,
ein Drain des zweiten Schaltelements (M24) mit dem Gate des Ladeschaltelements (M21) verbunden ist, und wobei,
wenn der erste Kondensator (C41, C42) der Versorgungsspannungserzeugungsschaltung (101) nicht kurzgeschlossen ist, das erste Schaltelement (M23) leitend ist, das zweite Schaltelement (M24) ausgeschaltet ist und das Ladeschaltelement (M21) leitend ist,
und wenn der erste Kondensator (C41, C42) der Versorgungsspannungserzeugungsschaltung (101) kurzgeschlossen ist,
das erste Schaltelement (M23) ausgeschaltet ist, das zweite Schaltelement (M24) leitend ist und das Ladeschaltelement (M21) ausgeschaltet ist.

2. Versorgungsspannungssteuerungsschaltung (100) nach Anspruch 1, **dadurch gekennzeichnet, dass** das Gate des Ladeschaltelements (M21) über einen zweiten Widerstand (R21) mit dem Ladeknoten (A) verbunden ist,
ein dritter Widerstand (R35) und ein zweiter Kondensator (C29) zwischen dem Gate und einer Source des ersten Schaltelements (M23) parallel geschaltet sind
und ein dritter Kondensator (C21) zwischen dem Gate und einer Source des zweiten Schaltelements (M24) parallel geschaltet ist.

3. Versorgungsspannungssteuerungsschaltung (100) nach Anspruch 2, **dadurch gekennzeichnet, dass** ein vierter Kondensator (C23) zwischen dem Ladeknoten (A) und einem Masseanschluss geschaltet ist.

4. Versorgungsspannungssteuerungsschaltung (100) nach Anspruch 3, **dadurch gekennzeichnet, dass** der vierte Kondensator (C23) parallel zu einer ersten Spannungsstabilisierungseinheit (ZD21) geschaltet ist,
zwei Anschlüsse des zweiten Widerstands (R21) parallel zu einer zweiten Diodeneinheit (D21) geschaltet sind
und eine zweite Spannungsstabilisierungseinheit (ZD22) zwischen dem Ladeknoten und einer Source des Ladeschaltelements (M21) parallel geschaltet ist.

5. Schaltnetzteil (200), umfassend eine Steuerungsschaltung (U20) und die Versorgungsspannungssteuerungsschaltung (100) nach einem der Ansprüche 1 bis 4, wobei die Versorgungsspannungssteuerungsschaltung (100) eine Versorgungsspannung für die Steuerungsschaltung (U20) bereitstellt.

6. Schaltnetzteil (200) nach Anspruch 5, umfassend einen Leistungsschalter (M2), der mit dem Ladeschaltelement (M21) in Reihe geschaltet ist und der von der Steuerungsschaltung (U20) gesteuert wird.

7. Schaltnetzteil (200) nach Anspruch 6, umfassend einen Transformator (7) mit einer Primärwicklung (L20b), einer Sekundärwicklung (L20c) und einer Hilfswicklung (L20), wobei die Primärwicklung (L20b) mit dem Ladeschaltelement (M21) und dem Leistungsschalter (M2) in Reihe geschaltet ist.

8. Schaltnetzteil (200) nach Anspruch 7, wobei ein primärseitiger Strom in der Primärwicklung (L20b) fließt, wenn das Ladeschaltelement (M21) und der Leistungsschalter (M2) eingeschaltet sind.

9. Schaltnetzteil (200) nach Anspruch 8, wobei eine Versorgungsspannung in die Hilfswicklung (L20) induziert wird, wenn ein primärseitiger Strom in der Primärwicklung (L20b) fließt, wobei diese Versorgungsspannung über eine Entkopplungsdiode (D41) in den ersten Kondensator (C41, C42) der Versorgungsspannungserzeugungsschaltung (101) eingespeist wird.

10. LED-Treiber, umfassend eine Steuerungsschaltung (U20) und die Versorgungsspannungssteuerungsschaltung (100) nach einem der Ansprüche 1 bis 4, wobei die Versorgungsspannungssteuerungsschaltung (100) eine Versorgungsspannung für die Steuerungsschaltung (U20) bereitstellt, wobei der LED-Treiber vorzugsweise einen Sperrwandler umfasst.

## Revendications

1. Circuit de commande de tension d'alimentation (100) configuré pour fournir une tension d'alimentation pour un circuit de commande (U20) d'une alimentation commutée (200), le circuit de commande de tension d'alimentation (100) comprend :
un circuit de génération de tension d'alimentation (101) ayant un premier condensateur (C41, C42) et une première borne de sortie (1011), le premier condensateur étant chargé pour générer une tension d'alimentation, la tension d'alimentation étant délivrée en sortie par la première borne de sortie (1011) du circuit de génération de tension d'alimentation (101) au circuit de commande (U20) ;
un élément de commutation de charge (M21), dont une porte est connectée à un nœud de charge (A), dans lequel, lorsque l'élément de commutation de charge (M21) est activé, l'élément de commutation de charge (M21) est configuré pour fournir un courant pour charger le premier condensateur (C41, C42) ; et
une unité de détection de court-circuit et de commutation (102), qui est connectée à la première borne de sortie (1011) du circuit de génération de tension d'alimentation (101), dans lequel, lorsque le premier condensateur (C41, C42) du circuit de génération de tension d'alimentation (101) est court-circuité, l'unité de détection de court-circuit et de commutation (102) est configurée pour désactiver l'élément de commutation de charge (M21), de façon à arrêter l'alimentation en courant pour charger le premier condensateur (C41, C42),
**caractérisé en ce que**
l'unité de détection de court-circuit et de commutation (102) comprend un premier élément de commutation (M23) et un deuxième élément de commutation (M24) ;
dans lequel, une porte du premier élément de commutation (M23) est connectée à la première borne de sortie par le biais d'une première unité de diode (D22),
un drain du premier élément de commutation est connecté au nœud de charge par le bais d'une première résistance (R36),
une porte du deuxième élément de commutation (M24) est connectée au drain du premier élément de commutation (M23),
un drain du deuxième élément de commutation (M24) est connecté à la porte de l'élément de commutation de charge (M21), et dans lequel,
lorsque le premier condensateur (C41, C42) du circuit de génération de tension d'alimentation (101) n'est pas court-circuité, le premier élément de commutation (M23) est conducteur, le deuxième élément de commutation (M24) est désactivé, et l'élément de commutation de charge (M21) est conducteur,
et lorsque le premier condensateur (C41, C42) du circuit de génération de tension d'alimentation (101) est court-circuité,
le premier élément de commutation (M23) est désactivé, le deuxième élément de commutation (M24) est conducteur, et l'élément de commutation de charge (M21) est désactivé.

2. Circuit de commande de tension d'alimentation (100) selon la revendication 1, **caractérisé en ce que,** la porte de l'élément de commutation de charge (M21) est connectée au nœud de charge (A) par le biais d'une deuxième résistance (R21),
une troisième résistance (R35) et un deuxième condensateur (C29) sont connectés en parallèle entre la porte et une source du premier élément de commutation (M23),
et un troisième condensateur (C21) est connecté en parallèle entre la porte et une source du deuxième élément de commutation (M24).

3. Circuit de commande de tension d'alimentation (100) selon la revendication 2, **caractérisé en ce que,** un quatrième condensateur (C23) est connecté entre le nœud de charge (A) et une borne de terre.

4. Circuit de commande de tension d'alimentation (100) selon la revendication 3, **caractérisé en ce que,** le quatrième condensateur (C23) est connecté en parallèle à une première unité de stabilisation de tension (ZD21),
deux bornes de la deuxième résistance (R21) sont connectées en parallèle à une deuxième unité de diode (D21),
et une deuxième unité de stabilisation de tension (ZD22) est connectée en parallèle entre le nœud de charge et une source de l'élément de commutation de charge (M21).

5. Alimentation commutée (200), comprenant un circuit de commande (U20) et le circuit de commande de tension d'alimentation (100) tel que revendiqué dans l'une quelconque des revendications 1 à 4, le circuit de commande de tension d'alimentation (100) fournissant une tension d'alimentation pour le circuit de commande (U20).

6. Alimentation commutée (200) selon la revendication 5, comprenant un commutateur de puissance (M2) qui est connecté en série à l'élément de commutation de charge (M21) et qui est commandé par le circuit de commande (U20).

7. Alimentation commutée (200) selon la revendication 6, comprenant un transformateur (7) avec un enroulement primaire (L20b), un enroulement secondaire (L20c) et un enroulement auxiliaire (L20), de telle manière que l'enroulement primaire (L20b) est connecté en série à l'élément de commutation de charge (M21) et au commutateur de puissance (M2).

8. Alimentation commutée (200) selon la revendication 7, de telle manière qu'un courant côté primaire circule dans l'enroulement primaire (L20b) lorsque l'élément de commutation de charge (M21) et le commutateur de puissance (M2) sont activés.

9. Alimentation commutée (200) selon la revendication 8, de telle manière qu'une tension d'alimentation est induite dans l'enroulement auxiliaire (L20) lorsqu'un courant côté primaire circule dans l'enroulement primaire (L20b) de telle manière que cette tension d'alimentation est introduite par l'intermédiaire d'une diode de découplage (D41) dans le premier condensateur (C41, C42) du circuit de génération de tension d'alimentation (101).

10. Circuit d'attaque de DEL, comprenant un circuit de commande (U20) et le circuit de commande de tension d'alimentation (100) tel que revendiqué dans l'une quelconque des revendications 1 à 4, le circuit de commande de tension d'alimentation (100) fournissant une tension d'alimentation pour le circuit de commande (U20), de telle manière que le circuit d'attaque de DEL comprend de préférence un convertisseur à transfert indirect.
